# EUROPÄISCHE PATENTSCHRIFT

(11) **EP 1 522 202 B1**
(45) Veröffentlichungstag und Bekanntmachung des Hinweises auf die Patenterteilung: **04.01.2006**
(21) Anmeldenummer: 03740083.5
(22) Anmeldetag: 11.06.2003
(51) Int. Cl.: H04Q 7/38

(54) **ERSTELLEN VON DIENSTEVEREINBARUNGEN ZUR NUTZUNG NETZINTERNER FUNKTIONEN VON TELEKOMMUNIKATIONSNETZEN**
GENERATION OF SERVICE AGREEMENT FOR THE USE OF NETWORK INTERNAL FUNCTIONS IN TELECOMMUNICATION NETWORKS
ETABLISSEMENT D'ACCORDS DE SERVICES POUR L'UTILISATION DE FONCTIONS INTERNES A DES RESEAUX DE TELECOMMUNICATION

(30) Priorität: 15.07.2002 DE 10231972
(43) Veröffentlichungstag der Anmeldung: 13.04.2005
(73) Patentinhaber: SIEMENS AKTIENGESELLSCHAFT, 80333 München (DE)
(72) Erfinder: LEITGEB, Manfred, A-2440 Gramatneusiedl (AT); SWETINA, Jörg, A-1060 Wien (AT)
(86) Internationale Anmeldenummer: PCT/DE2003/001941
(87) Internationale Veröffentlichungsnummer: WO 2004/017659

(56) Entgegenhaltungen:
- UNMEHOPA M R ET AL: "THE SUPPORT OF MOBILE INTERNET APPLICATIONS IN UMTS NETWORKS THROUGH THE OPEN SERVICE ACCESS" BELL LABS TECHNOLOGY, BELL LABORATORIES, MURREY HILL, NJ, US, Bd. 6, Nr. 2, 2002, Seiten 47-64, XP001132330 ISSN: 1089-7089
- M.WEGDAM, D-J.PLAS, M.UNMEHOPA: "Validation of the Open Service Access API for UMTS application provisioning" PROMS 2001, LNCS2213, PP.210-221, [Online] 2001, XP002256629 Gefunden im Internet: <URL:http://citeseer.nj.nec.com/cs> [gefunden am 2003-10-06]
- "Service Aspects; Stage 1 Service Requirements for the Open Service Access (OSA) (Release 5) 3GPP TS 22.127 v5.2.0" 3RD GENERATION PARTNERSHIP PROJECT; TECHNICAL SPECIFICATION GROUP SERVICES AND SYSTEM ASPECTS;, [Online] Dezember 2001 (2001-12), XP002256630 Gefunden im Internet: <URL:www.3gpp.org> [gefunden am 2003-10-06]

## Beschreibung

Die Erfindung betrifft ein Verfahren zum Zugriff auf Netzinterne Funktionen von Telekommunikationsnetzen von einer externen Stelle aus, wobei der Zugriff über eine gesicherte Diensteschnittstelleneinrichtung eines Netzes aufgrund einer für diese Diensteschnittstelle gültigen Dienstevereinbarung zugunsten der externen Stelle erfolgt. Ein derartiges Verfahren wird beispielweise in Dokument von Unmchopa M R ET AL "THE SUPPORT OF MOBILE INTERNET APPLICATIONS IN VMTS NETWORKS THROUGH THE OPEN SERVICE ACCESS" beschrieben.

In heutigen Mobilfunknetzen, wie z.B. dem bekannten UMTS-System, ist es externen Anbietern möglich, Netzteilnehmern über das Mobilfunknetz erfolgende Dienste anzubieten, wie z.B. ortsbezogene Informationsdienste (z.B. Anfrage für eine nächstgelegene Tankstelle), Messaging-Dienste (beispielsweise Chatrooms), Spiele usw. Hierbei werden unter externen Anbietern Einrichtungen oder Unternehmen verstanden, die selbst kein Kommunikationsnetz betreiben oder unterhalten oder einem Netzbetreiber in für den Betrieb eines Netzes notwendigen Aufgaben unterstützen. Die von ihnen angebotenen Dienste werden im Folgenden als externe Dienste oder auch Drittdienste (englisch 'third-party services') bezeichnet.

Oftmals geschieht die Abwicklung eines externen Dienstes über eine gesicherte Diensteschnittstelle (SSAI, 'secure service access interface') des betreffenden Netzes. Die Nutzung einer solchen Diensteschnittstelle erfolgt aufgrund einer Dienstevereinbarung (SLA, 'service level agreement') zwischen dem Anbieter und dem Netzbetreiber. Naturgemäß ist die Zahl der Dienstevereinbarungen, die ein externer Anbieter mit Netzen abschließt, beschränkt, und in der Regel wird ein Anbieter eine Dienstevereinbarung nur mit jenen Netzen anbieten, in deren Einzugsbereich (d.i. zumeist ein Land bzw. Staat) sich der Anbieter bzw. seine den Dienst durchführenden Einrichtungen befinden. Es kann daher passieren, dass einem mobilen Teilnehmer, der sich gerade - anstatt in seinem Heimatnetz - im Einzugsbereich eines anderen Netzes ('visited network' = "Gastnetz") aufhält und einen in diesem Gastnetz verfügbaren externen Dienst nutzen will, die Nutzung des Dienstes versagt wird, weil der Dienst einen Zugriff auf Teilnehmer-bezogene Daten benötigt und dies mangels einer hinreichenden Vereinbarung zwischen dem Dienst-Anbieter und dem Heimatnetz nicht möglich ist. Eine solche Situation ergibt sich insbesondere deshalb, weil das Heimatnetz des Teilnehmers nicht mit jenem Netz ("Zugangsnetz"), über das der Anbieter seinen externen Dienst anbietet, übereinstimmt.

Für die derzeit gebräuchlichen Dienste (sogenannte "Legacy-Dienste" - 'legacy services') der Mobilfunknetze besteht ein solches Problem der eingeschränkten Nutzungsmöglichkeit nicht, da die Legacy-Dienste standardisierte, von den Netzen direkt zur Verfügung gestellte Dienste darstellen. Die Mobilität dieser Dienste ist durch die den Mobilnetzen immanenten Mobilitätsmechanismen auf der Netzwerk-Ebene garantiert.

Es ist Aufgabe der Erfindung, die Nutzung netzinterner Dienstfunktionen, insbesondere zum Zugriff auf Teilnehmerbezogene Daten, durch externe Dienste auch in Fällen zu ermöglichen, in denen die Dienstfunktionen über ein anderes Netz angefordert werden.

Diese Aufgabe wird von einem Verfahren der eingangs genannten Art gelöst, bei welchem erfindungsgemäß seitens der Schnittstelleneinrichtung (SSAI) aufgrund einer an sie von der externen Stelle gesendeten Anfrage betreffend eine netzinterne Funktion geprüft wird, ob die Anfrage die Nutzung einer Funktion eines anderen Netzes ("Zielnetz") beinhaltet, und falls dies zutrifft, sodann auf der Grundlage einer Dienstevereibarung, die zwischen der Schnittstelleneinrichtung und einer gesicherten Diensteschnittstelleneinrichtung des Zielnetzes abgeschlossen wurde, ("transitive Vereinbarung") eine zweite Anfrage betreffend die Funktionen dieses Netzes zwischen den Schnittstelleneinrichtungen ausgetauscht wird.

In einem besonders wichtigen Fall der Erfindung stimmt das Zielnetz mit dem Heimatnetz des den Dienst nutzenden Teilnehmers überein, sodass der Zugriff im Rahmen eines Dienstes stattfindet, der von der externen Stelle für einen Teilnehmer ausgeführt wird, dessen Heimatnetz das Zielnetz ist. Die Erfindung gestattet hierbei auf einfache Weise die Nutzung Teilnehmer-bezogener Daten, ohne dass dies eine ungebührliche Beeinträchtigung der Datenschutzinteressen nach sich zöge.

Die transitive Vereinbarung kann bereits vorliegen, d.h. schon vor Beginn des Dienstes abgeschlossen worden sein. Alternativ kann die transitive Vereinbarung jeweils aufgrund der ersten Anfrage, die sich auf ein zweites Netz bezieht, mit diesem Netz abgeschlossen werden, wobei die Vereinbarung je nach Wahl des Betreibers nur für die Dauer der Dienstausführung gilt oder nach dem Dienst weiter bestehen kann.

Als Grundlage für die transitive Vereinbarung wird in der Regel verlangt werden, dass zwischen dem Dienst-Anbieter und dem Zugangsnetz eine Dienstevereinbarung gültig ist, sowie zwischen diesem Netz und dem Zielnetz - d.i. üblicher Weise das Heimatnetz des den Dienst nutzenden Teilnehmers - ebenfalls eine Dienstevereinbarung (beispielsweise zusammen mit einer Roaming-Vereinbarung) besteht. In einem solchen Fall ist es zweckmäßig, wenn die transitive Vereinbarung als zugunsten der externen Stelle geltende Dienstevereinbarung erstellt wird, sofern ein zwischen den als Mobilfunknetzen realisierten Netzen bestehenden Roaming-Abkommen und eine Dienstevereinbarung des Zugangsnetzes zugunsten der externen Stelle besteht.

Wie bereits erwähnt, kann die externe Stelle ein Server für externe Dienste sein, die im Bereich des Zugangsnetzes (oder eines über das Zugangsnetz erreichbaren Gastnetzes) angeschlossene oder eingebuchte Teilnehmer unter Nutzung netzinterner Dienste ausgeführt werden.

Des Weiteren ist es vorteilhaft, wenn auf die zweite Anfrage folgende, zwischen der externen Stelle und dem Zielnetz ausgetauschte Nachrichten über die Schnittstelleneinrichtungen übermittelt werden, wobei die Schnittstelleneinrichtung des Zugangsnetzes zwischen der externen Stelle und der Schnittstelleneinrichtung des Zielnetzes ausgetauschte Nachrichten transparent weiterleitet. Werden die auf die zweite Anfrage folgenden Nachrichten zwischen der externen Stelle und Netzstellen des Zielnetzes ausgetauscht, so können diese Nachrichten über die Schnittstelleneinrichtung des Zugangsnetzes derart übermittelt werden, dass die Schnittstelleneinrichtung die Nachrichten als transparenter Proxy-Server weiterleitet. Die Erfindung wird im Folgenden anhand eines nicht einschränkenden Ausführungsbeispiels näher erläutert. Dazu werden die beigefügten Zeichnungen herangezogen, welche zeigen:
- Fig. 1: eine schematische Darstellung der an dem Ausführungsbeispiel beteiligten Netze und Netzkomponenten, sowie
- Fig. 2: ein Signalablaufsdiagramm des Einleitens eines externen Dienstes.

Es sei an dieser Stelle darauf hingewiesen, dass in den Figuren lediglich Komponenten und Einrichtungen gezeigt sind, soweit dies für die Darstellung der Erfindung erforderlich ist; die übrigen Einrichtungen, insbesondere Vermittlungen und Verbindungselemente, verstehen sich für den Fachmann und sind daher nicht gezeigt.

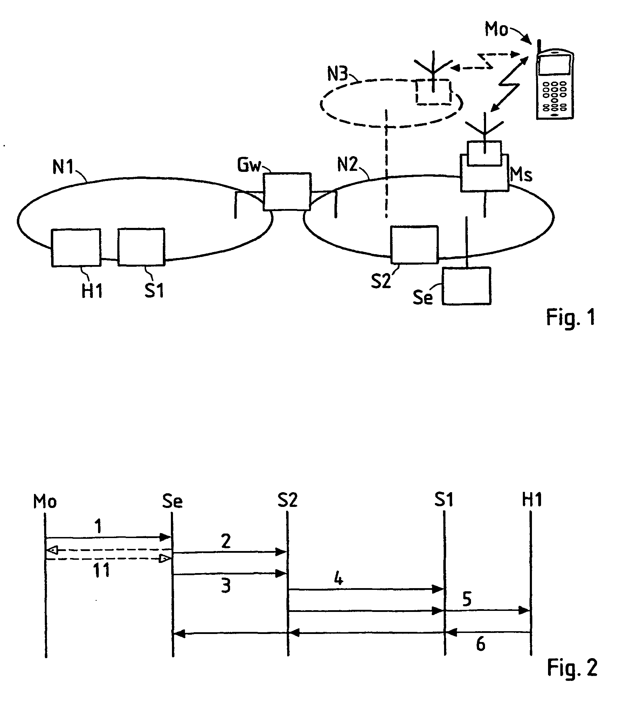

Wie in Fig. 1 gezeigt, befindet sich der Nutzer eines Mobiltelefons Mo als mobiler Teilnehmer im Einzugsbereich eines Mobilfunknetzes N2, das beispielsweise als UMTS-Netz bekannter Art realisiert ist und nach bekannter Art z.B. über ein Gateway Gw mit dem Heimatnetz N1 des Teilnehmers Mo verbunden ist. Das Netz N2 dient somit dem Teilnehmer Mo als Gastnetz, an das er über die Basisstation einer Mobilvermittlungsstelle Ms angebunden, die auch als Besucherregister temporär Teilnehmer-bezogene Daten verwaltet. Im Heimatnetz N1 ist für die Speicherung von für Teilnehmer signifikanten Daten, insbesondere permanente und quasi-permanente Daten wie Rufnummer, Geräteart, abonnierte Dienste etc. sowie temporärer Daten wie den momentanen Aufenthaltsort, ein Heimatregister H1 (auch als HLR, 'Home Location Register', bezeichnet) vorgesehen.

Ein externer Dienst-Anbieter bietet mittels einer an das Mobilfunknetz N2 angebundenen Servereinrichtung Se einen Dienst an, beispielsweise einen Auskunftsdienst, der z.B. als Anwendungsprogramm auf dem Server läuft und über eine WAP-Seite angeboten wird. Dieser Dienst greift bei seiner Ausführung auf Dienste des Netzes N2 zurück, z.B. zu Zwecken der Vergebührung. Als Netzeinrichtung für den Zugriff auf die Netzinternen Dienste des Netzes N2 durch externe Anbieter ist im Netz N2 eine gesicherte Diensteschnittstelle S2 eingerichtet, und ebenso im Netz N1 eine gesicherte Diensteschnittstelle S1, die insbesondere für (nicht gezeigte) dort angebundene Anbieter zuständig ist. Somit fungiert das Netz N2 als Zugangsnetz für die vom Server Se aus angebotenen externen Dienste.

Eine gesicherte Diensteschnittstelle - im Folgenden kurz SSAI genannt - eines Netzes ist eine elektronische Schnittstelle, die aufgrund bestehender Standards oder anderer Regelungen festgelegt ist und Diensten externer Dienst-Anbieter mit Vertrauensstellung den Zugriff auf Netz-interne Funktionen ermöglicht, wie z.B. auf eine Anrufsteuerung, Gebührenfunktionen oder Abfrage von Benutzer-Profilen. Ein Beispiel eines SSAI ist die sogenannte OSA-Schnittstelle ('Open Service Access'), die von der 3GPP in dem Standard TS 22.127 definiert ist. Nähere Informationen zu dem 3GPP-Konsortium und die zugeordneten Standards sind über Internet unter der Website http://www.3gpp.org zugänglich.

Damit ein externer Anbieter gegenüber einer SSAI zur Zugriffsnutzung berechtigt ist, muss eine Dienstevereinbarung vorliegen. Eine solche Dienstevereinbarung - im Folgenden kurz SLA ('service level agreement') genannt - stellt die Grundlage für die Zugriffsberechtigung und Authentisierung des Dienstes bzw. des den Dienst ausführenden Servers dar. Eine SLA beruht in aller Regel auf einem Vertrag zwischen dem externen Anbieter und dem Betreiber der SSAI bzw. des betreffenden Netzes und ist auf dem SSAI in elektronischer Form, z.B. in einer eigenen Datei oder als Eintrag in einer Datenbank, abgespeichert. Wenn ein Netzbetreiber - z.B. jener des Netzes N2 - dem Anbieter eines externen Dienstes den Zugriff auf Netzfunktionen (die im zugrunde liegenden Vertrag festgelegt sind) über die SSAI - im Beispiel die SSAI S2 - gestattet, so wird der SSAI dahingehend eingerichtet, dass der Diensteserver Se des Anbieters einen solchen Zugriff nach entsprechender Authentisierung autorisiert ist. Die Authentisierung des Dienstes bzw. Servers Se kann elektronisch z.B. durch Übersenden eines oder mehrerer SLA-Zertifikate an den SSAI S2 erfolgen, wobei für den Nachrichtenaustausch zwischen dem Server Se und dem SSAI S2 ein für die Dienst-Abfrage geeignetes Protokoll - im Beispiel das OSA-API gemäß 3GPP TS 29.198 - genutzt wird.

Der Zugriff auf die Dienstfunktionen erfolgt in der Regel innerhalb einer Session ("Sitzung"), die zwischen den beteiligten Stellen (in diesem Fall die Stellen Se,S2) z.B. für die Dauer der Dienstausführung eröffnet wird. Zu Beginn der Session wird durch die bereits erwähnte Authentisierung mittels SLA-Zertifikat(e) eine sogenannte elektronische SLA eingerichtet, die für diese Session Gültigkeit hat.

Es sei angemerkt, dass für UMTS-Netze (wie die Netze N1,N2 des Ausführungsbeispiels) die Realisierung der SSAI-Einrichtungen als OSA-Gateways vorgesehen ist. Zwischen den OSA-Gateways S1,S2 verschiedener UMTS-Netze N1,N2 ist derzeit keine Kommunikation vorgesehen, die einen Austausch von SLA-Zertifikaten zulässt. Gemäß der Erfindung wird dieser Mangel dadurch beseitigt, dass bei Bedarf zwischen den SSAI-Stellen eine "transitive" elektronische SLA eingerichtet wird und der weitere Dialog zwischen diesen Stellen nach Art des Dialogs zwischen einer SSAI und einem externen Server erfolgt. Dies wird im Folgenden näher erläutert.

Das Signalablaufsdiagramm der Fig. 2 zeigt die Nachrichten, die zur Einleitung eines Dienstes zwischen dem Dienst-Server Se, dem Teilnehmer Mo und den Netzstationen S1,S2 ausgetauscht werden. In Fig. 2 stellt die vertikale Achse die Zeitrichtung (nach unten) dar, und die einzelnen Netzstellen sind als vertikale Linien symbolisiert.

Wenn der Teilnehmer Mo einen externen Dienst des Anbieters anfordert, sendet er eine Anforderung 1 bekannter Art über das Gastnetz N2, in dem er sich befindet, an den Server Se. Diese Anforderung kann auf verschiedene Art erfolgen, beispielsweise in Form eines Telefonrufs über eine dem Server Se zugeordnete Servicenummer erfolgen, über einen Zugriff auf eine Internet-Site oder eine WAP-Site, od.dgl. Aufseiten des Servers Se wird dann der betreffende externe Dienst für den Teilnehmer Mo durchgeführt, wobei z.B. ein Dialog 11 mit dem Teilnehmer ablaufen kann.

Wie bereits erwähnt, tritt oftmals der Fall ein, dass der Dienst zusätzlich einen Zugriff auf Funktionen des Heimatnetzes des Teilnehmers - oder eines anderen Zielnetzes, das vom Zugangsnetz verschieden ist - benötigt, z.B. eine Vergebührung, etwa um Sonderleistungen abzugelten. Liegt zwischen dem Heimatnetz N1 und dem Dienst-Anbieter bzw. dessen Server Se keine SLA vor, so sieht die Erfindung vor, dass der Funktionszugriff auf der Grundlage einer bestehenden SLA des Anbieters/Servers Se mit dem Zugangsnetz N2 und einer zwischen den Netzen (hier: Zielnetz N1 und Zugangsnetz N2) bestehenden Zugangsmöglichkeit in Form "transitiver SLAs" erfolgt, wie im Folgenden näher erläutert ist.

In dem Fall des Ausführungsbeispiels stimmen Gastnetz und Zugangsnetz N2 überein. Im Allgemeinen, wie dies in Fig. 1 durch das strichliert gezeigte Netz N3 angedeutet ist, können diese verschieden sein, wobei die Kommunikation zwischen dem (über das Zugangsnetz N2 angebundenen) Server Se und dem Teilnehmer Mo im Gastnetz N3, das dann lediglich als Transportnetz dient, nach bekannter Art erfolgt. In noch einer anderen Konstellation könnte sich der Teilnehmer im Zielnetz befinden - d.h. Gastnetz N3 und Zielnetz N1 sind gleich - und einen externen Dienst nutzen, dessen Zugang über ein anderes Zugangsnetz N2 erfolgt. Ungeachtet dieser besonderen Konstellationen laufen die für die Erfindung wesentlichen Vorgänge zwischen dem Server Se und den Einrichtungen seines Zugangsnetzes N2 und den Einrichtungen des Zielnetzes N1 ab.

Anstatt dass der Server Se mit der SSAI S1 des Heimatnetzes N1 des Teilnehmers Mo kommuniziert - was ja mangels einer SLA zwischen diesen Stellen nicht möglich ist -, sieht die Erfindung vor, dass die Abwicklung der netzinternen Dienstzugriffe über die SSAI S2 des Zugangsnetzes N2 erfolgt, wo ja voraussetzungsgemäß eine SLA vorliegt.

Für die Nutzung der Netzdienste wird zwischen dem Server Se und dem SSAI S2 eine Session eingerichtet. Zunächst sendet der Server Se ein SLA-Zertifikat 2 an die Zugangsnetz-SSAI S2, um eine elektronische SLA einzurichten, die als Grundlage der Authentisierung für die Session dient; diese SLA entfaltet vorerst Wirkung nur für die Session zwischen Server Se und der SSAI S2 in dem Netz N2. Danach wird eine Anfrage 3 für eine Netzdienstfunktion gesendet, z.B. für die Vergebührung eines bestimmten Betrages, wobei diese Anfrage in der Regel weitere Angaben enthält, so insbesondere eine Kennung des Teilnehmers Mo (z.B. dessen IMSI oder TMSI) sowie bei Bedarf eine Kennung des Zielnetzes N1.

Die Anfrage 3 wird seitens der Zugangsnetz-SSAI S2 empfangen und ausgewertet. Hierbei wird erkannt, dass die Anfrage Netzdienste eines anderen Zielnetzes erfordert, in diesem Fall des Heimatnetzes N1. Deshalb wird gemäß der Erfindung im nächsten Schritt eine "transitive SLA" mit dem SSAI S1 des Zielnetzes dadurch aufgebaut, dass die SSAI S2 ein SLA-Zertifikat 4 an die SSAI S1 des Zielnetzes N1 sendet.

Es wird somit zwischen den SSAI-Stellen S1,S2 eine Session eröffnet, die zusammen mit der Session zwischen der SSAI S2 und dem Server Se im Zugangsnetz N2 insgesamt im Sinne der Erfindung eine Kommunikation zwischen dem Server Se und der Zielnetz-SSAI S1 gestattet. Damit dies stattfinden kann, muss die Zugangsnetz-SSAI S2 in einer Weise eingerichtet sein, dass sie - neben ihrer bekannten Funktion als Server für SSAI-Transaktionen - als Klient Anfragen an eine andere SSAI richten kann und von dort entsprechende Server-Antworten empfangen kann. Vorteilhafter Weise wird hierfür das gleiche Protokoll verwendet wie zwischen der SSAI S2 und dem externen Server Se, wie z.B. das bereits genannte OSA-API.

Darüber hinaus ist zweckmäßiger Weise die Zielnetz-SSAI S1 dafür eingerichtet, dass eine Dienstanfrage sowie eine SLA vonseiten einer SSAI S2 eines anderen Netzes, mit dem z.B. ein Roaming-Abkommen besteht, angefordert werden kann; diese Zugangsmöglichkeit besteht somit neben jenen der (nicht gezeigten) externen Anbieter, für die mit dem SSAI S1 eine SLA besteht, und im Wesentlichen gleichwertig dazu. Das Einrichten dieses Zugangs kann auf gleiche Weise wie für die einen externen Provider geschehen, nämlich in der Regel durch entsprechende Konfiguration bzw. Administration der Einstellungen der SSAI S1, auf der Grundlage z.B. eines Roaming-Abkommens oder einer anderen Vereinbarung zwischen den Betreibern der beteiligten Netze N1,N2.

Nachdem die transitive SLA zwischen den SSAI-Stellen S1,S2 eingerichtet wurde, können Anfragen 5 an die SSAI S1 gesendet werden, die diese gegebenenfalls in Abhängigkeit von der jeweiligen Anfrage an andere Netzstationen des Zielnetzes weiterleitet. Hierbei leitet die SSAI S2 die zwischen den terminalen Stellen S1,Se ausgetauschten Nachrichten transparent weiter. Hierbei nimmt die Zugangsnetz-SSAI S2 Anfragen des Servers Se entgegen und leitet diese in dem mit der SSAI S1 geführten Dialog an letztere weiter; Antworten von der SSAI S1 wiederum werden zu dem Server Se zurück geleitet.

In dem hier betrachteten Fall, nämlich einer Vergebührung, ist die Anfrage an das Heimatregister H1 des Heimatnetzes N1 gerichtet. Für weitere Nachrichten, die zwischen dem Server Se und dem Zielnetz N1 ausgetauscht werden, wie z.B. die Vergebührungs-Bestätigung 6 des Heimatregisters H1, dienen die SSAI-Einrichtungen S1,S2 als transparente Proxy-Stationen, über die die betreffenden Nachrichten und Antworten weitergeleitet werden.

Bei dem oben diskutierten Vorgang wird die transitive SLA für die Dauer einer Session geschlossen und umfasst somit nur die der Dienstanfrage zugehörende Transaktion. Bei einer anderen, insbesondere einer späteren oder aus anderen Gründen getrennt ablaufenden, Dienstanfrage oder Transaktion muss somit eine neue transitive SLA geschlossen werden. Dagegen kann in einer Variante das Einrichten der transitiven SLA dauerhaft erfolgen, sodass bei folgenden Dienstanfragen der Schritt 4 der Fig. 2 entfallen würde. Stattdessen würde an dieser Stelle seitens der SSAI S1 und S2 das Bestehen einer (bereits abgeschlossenen) transitiven SLA überprüft. Lediglich wenn eine SLA nicht besteht (oder inzwischen abgelaufen ist) wird dann der Aufbau 4 einer transitiven SLA durchgeführt. Mit anderen Worten, der Abschluss der SLA zwischen den SSAI-Einrichtungen S1,S2 muss nicht erst anlässlich der konkreten Anfrage 3 erfolgen, sondern kann schon vor dieser zustande gekommen sein.

Es sei darauf hingewiesen, dass der an dem obigen Ausführungsbeispiel beschriebene Vorgang lediglich beispielhaft und für die Erfindung nicht einschränkend ist. Vielmehr kann die Erfindung in allgemeineren Fällen verwendet werden, sofern die folgenden Bedingungen erfüllt sind:
- die beteiligten Telekommunikationsnetze (zwei oder mehr) haben jeweils eine SSAI;
- zwischen den beteiligten Netzen bzw. den zugehörenden SSAI-Einrichtungen bestehen die nötigen Protokolle (z.B. ein OSA-Protokoll) zum Einrichten einer SLA;
- die externe Stelle (wie z.B. der externe Dienst-Anbieter) hat eine SLA mit einem der beteiligten Netze.

Unter den genannten Bedingungen ermöglicht es die Erfindung, ausgehend von dem Netz, mit dem der externe Stelle eine SLA eingegangen ist, eine transitive SLA zu dem betreffenden Zielnetz aufzubauen, das für die Beantwortung der jeweils gewünschten Dienstanforderung benötigt wird.

## Patentansprüche

1. Verfahren zum Zugriff auf Netz-interne Funktionen von Telekommunikationsnetzen (N1,N2) von einer externen Stelle (Se) aus, wobei der Zugriff über eine gesicherte Diensteschnittstelleneinrichtung (S2) eines Netzes (N2) aufgrund einer für diese Diensteschnittstelle gültigen Dienstevereinbarung zugunsten der externen Stelle (Se) erfolgt,
**dadurch gekennzeichnet,**
**dass** seitens der Schnittstelleneinrichtung (S2) aufgrund einer an sie von der externen Stelle (Se) gesendeten Anfrage (3) betreffend eine netzinterne Funktion geprüft wird, ob die Anfrage die Nutzung einer Funktion eines anderen Netzes (N1) beinhaltet, und falls dies zutrifft, sodann auf der Grundlage einer Dienstevereinbarung (4), die zwischen der Schnittstelleneinrichtung (S2) und einer gesicherten Diensteschnittstelleneinrichtung (S1) des Zielnetzes (N1) abgeschlossen wurde, eine zweite Anfrage (5) betreffend die Funktionen dieses Netzes zwischen den Schnittstelleneinrichtungen (S1,S2) ausgetauscht wird.

2. Verfahren nach Anspruch 1,
**dadurch gekennzeichnet,**
**dass** der Zugriff im Rahmen eines Dienstes stattfindet, der von der externen Stelle (Se) für einen Teilnehmer (Mo) ausgeführt wird, dessen Heimatnetz das Zielnetz (N1) ist.

3. Verfahren nach Anspruch 1 oder 2,
**dadurch gekennzeichnet,**
**dass** die transitive Vereinbarung als zugunsten der externen Stelle (Se) geltende Dienstevereinbarung erstellt wird, sofern ein zwischen den als Mobilfunknetzen realisierten Netzen (N1,N2) bestehenden Roaming-Abkommen und eine Dienstevereinbarung des Zugangsnetzes (N2) zugunsten der externen Stelle (Se) besteht.

4. Verfahren nach Anspruch 1, 2 oder 3,
**dadurch gekennzeichnet,**
**dass** die externe Stelle (Se) ein Server für externe Dienste ist, die im Bereich des Zugangsnetzes (N1) oder eines über das Zugangsnetz erreichbaren Gastnetzes (N3) angeschlossene oder eingebuchte Teilnehmer (Mo) unter Nutzung netzinterner Dienste ausgeführt werden.

5. Verfahren nach einem der Ansprüche 1 bis 4,
**dadurch gekennzeichnet,**
**dass** auf die zweite Anfrage (5) folgende, zwischen der externen Stelle (Se) und dem Zielnetz (N1) ausgetauschte Nachrichten über die Schnittstelleneinrichtungen (S1,S2) übermittelt werden, wobei die Schnittstelleneinrichtung (S1) des Zugangsnetzes zwischen der externen Stelle (Se) und der Schnittstelleneinrichtung (S2) des Zielnetzes ausgetauschte Nachrichten transparent weiterleitet.

6. Verfahren nach einem der Ansprüche 1 bis 5,
**dadurch gekennzeichnet,**
**dass** auf die zweite Anfrage (5) folgende, zwischen der externen Stelle (Se) und Netzstellen (H1) des Zielnetzes ausgetauschte Nachrichten über die Schnittstelleneinrichtung (S1) des Zugangsnetzes übermittelt werden, wobei die Schnittstelleneinrichtung (S1) die Nachrichten als transparenter Proxy-Server weiterleitet.

7. Netzeinrichtung (S2) eines Telekommunikationsnetzes (N2), die als gesicherte Diensteschnittstelleneinrichtung (S2) zur Ausführung des Verfahrens nach Anspruch 1 eingerichtet ist.

## Claims

1. Method for accessing network-internal functions of telecommunication networks (N1, N2), from an external site (Se), with access taking place via a secure service interface device (S2) of a network (N2) on the basis of a service level agreement valid for said service interface in favour of the external site (Se),
**characterised in that**
it is verified on the part of the interface device (S2) on the basis of a request (3) sent to it from the external site (Se) relating to a network-internal function, whether the request involves the use of a function of another network (N1) and if so, a second request (5) relating to the functions of said network is exchanged between the interface devices (S1, S2) on the basis of a service level agreement (4) concluded between the interface device (S2) and a secure service interface device (S1) of the target network (N1).

2. Method according to Claim 1,
**characterised in that**
access takes place in the context of a service, which is executed by the external site (Se) for a user (Mo), the home network of which is the target network (N1).

3. Method according to Claim 1 or 2,
**characterised in that**
the transitive agreement is generated as a service level agreement in favour of the external site (Se), in so far as a roaming agreement exists between the networks (N1, N2) set up as mobile radio networks and a service level agreement exists on the part of the access network (N2) in favour of the external site (Se).

4. Method according to Claim 1, 2 or 3,
**characterised in that**
the external site (Se) is a server for external services which are executed in the area of the access network (N1) or a visited network (N3) accessible via the access network using network-internal services for users (Mo) that are connected or logged in.

5. Method according to one of Claims 1 to 4,
**characterised in that**
messages exchanged further to the second request (5) between the external site (Se) and the target network (N1) are transmitted via the interface devices (S1, S2), with the interface device (S1) of the access network forwarding messages exchanged between the external site (Se) and the interface device (S2) of the target network in a transparent manner.

6. Method according to one of Claims 1 to 5,
**characterised in that**
messages exchanged further to the second request (5) between the external site (Se) and network centres (H1) of the target network are transmitted via the interface device (S1) of the access network, with the interface device (S1) forwarding the messages as a transparent proxy server.

7. Network device (S2) of a telecommunication network (N2), which is set up as a secure service interface device (S2) to execute the method according to Claim 1.

## Revendications

1. Procédé d'accès à des fonctions de réseaux de télécommunication (N1, N2), internes aux réseaux, à partir d'un poste externe (Se), l'accès étant réalisé en faveur du poste externe (Se) par l'intermédiaire d'un dispositif d'interface de service sécurisé (S2) d'un réseau (N2), en raison d'un accord de services valable pour cette interface de service,
**caractérisé en ce**
**qu'**il est vérifié du côté du dispositif d'interface (S2) en raison d'une demande (3), émise à ce dispositif par le poste externe (Se), concernant une fonction interne au réseau, si la demande comprend l'utilisation d'une fonction d'un autre réseau (N1), et, en ce que, si c'est le cas, une deuxième demande (5) concernant les fonctions de ce réseau est échangée entre les dispositifs d'interface (S1, S2) sur la base d'un accord de service (4) conclu entre le dispositif d'interface de service (S2) et un dispositif d'interface de service sécurisé (S1) du réseau cible (N1).

2. Procédé selon la revendication 1,
**caractérisé en ce**
**que** l'accès a lieu dans le cadre d'un service qui est exécuté par le poste externe (Se) pour un abonné (Mo), dont le réseau local est le réseau cible (N1).

3. Procédé selon la revendication 1 ou 2,
**caractérisé en ce**
**que** l'accord transitif est établi comme un accord de service en vigueur en faveur du poste externe (Se), dans la mesure où un accord de roaming, existant entre les réseaux (N1, N2) réalisés comme réseaux de radiocommunication mobile, et un accord de service du réseau d'accès (N2), existent en faveur du poste externe (Se).

4. Procédé selon la revendication 1, 2 ou 3,
**caractérisé en ce**
**que** le poste externe (Se) est un serveur pour des services externes qui sont exécutés dans la zone du réseau d'accès (N1) ou d'un réseau visité (N3) accessible via le réseau d'accès pour des abonnés raccordés ou connectés (Mo) utilisant les services internes au réseau.

5. Procédé selon l'une quelconque des revendications 1 à 4,
**caractérisé en ce**
**que** des messages consécutifs à la deuxième demande (5), échangés entre le poste externe (Se) et le réseau cible (N1) sont transmis par l'intermédiaire des dispositifs d'interface (S1, S2), le dispositif d'interface (S1) du réseau d'accès transmettant de manière transparente les messages échangés entre le poste externe (Se) et le dispositif d'interface (S2) du réseau cible.

6. Procédé selon l'une quelconque des revendications 1 à 5,
**caractérisé en ce**
**que** des messages consécutifs à la deuxième demande (5), échangés entre le poste externe (Se) et des postes de réseau (H1) du réseau cible sont transmis par l'intermédiaire du dispositif d'interface (S1) du réseau d'accès, le dispositif d'interface (S1) transmettant les messages comme serveur proxy transparent.

7. Dispositif de réseau (S2) d'un réseau de télécommunication (N2), qui est configuré comme dispositif d'interface de service (S2) pour l'exécution du procédé selon la revendication 1.
